# EUROPÄISCHE PATENTSCHRIFT

(11) **EP 1 063 497 B1**
(45) Veröffentlichungstag und Bekanntmachung des Hinweises auf die Patenterteilung: **30.11.2005**
(21) Anmeldenummer: 00112637.4
(22) Anmeldetag: 15.06.2000
(51) Int. Cl.: G01D 18/00, G01D 5/165, B60G 17/015

(54) **Verfahren zur Bestimmung des Abstandes zweier zwischen einer unteren und einer oberen Abstandsgrenze zueinander beweglicher Bezugspunkte**
Method for determining the distance between a lower and upper limit of two reference points moving towards each other
Méthode pour déterminer la distance de séparation de deux points de référence qui se déplacent l'un par rapport à l' autre entre une limite inférieure et une limite supérieure

(30) Priorität: 24.06.1999 DE 19928865
(43) Veröffentlichungstag der Anmeldung: 27.12.2000
(73) Patentinhaber: Continental Aktiengesellschaft, 30165 Hannover (DE)
(72) Erfinder: Sommer, Stefan, Dr., 30916 Isernhagen K.B. (DE); Stiller, Alexander, Dr., 30823 Garbsen (DE); Schmitt, Wolfgang, 30419 Hannover (DE)

(56) Entgegenhaltungen:
- EP-A- 0 402 583
- EP-A- 0 534 645
- EP-A- 0 544 484
- WO-A-98/57130
- US-A- 5 461 564
- US-A- 5 644 225

## Beschreibung

Die Erfindung betrifft ein Verfahren zur Bestimmung des Abstandes zweier zwischen einer unteren und einer oberen Abstandsgrenze zueinander beweglicher Bezugspunkte, insbesondere ein Verfahren zur Bestimmung des Abstandes eines Fahrzeugaufbaus eines Kraftfahrzeuges gegenüber einem festen Bezugspunk (siehe EP-A-0 534 645), mittels eines Sensors, dessen Meßbereich in mehrere aufeinander folgende Meßwertintervalle unterteilt ist, wobei jedem Meßwertintervall das gleiche Signalintervall zugeordnet ist, und wobei dem Verfahren zugrunde gelegt ist, daß
- der Sensor in einer definierten Position zu den beiden Bezugspunkten derart positioniert ist, daß alle möglichen Abstände der Bezugspunkte den Meßwerten genau eines Meßwertintervalls zugeordnet sind, und daß
- der Sensor in der unteren Abstandsgrenze ein unteres Grenzsignal und in der oberen Abstandsgrenze ein oberes Grenzsignal anzeigt, und daß
- der Sensor ein Signal zwischen dem unteren und dem oberen Grenzsignal anzeigt, wenn der Abstand der Bezugspunkte zwischen der unteren und der oberen Abstandsgrenze liegt
- aus dem von dem Sensor angezeigten Signal eindeutig auf den Abstand der Bezugspunkte geschlossen werden kann.

Moderne Kraftfahrzeuge verfügen häufig zumindest an der Hinterachse über ein Niveauregelsystem mit Luftfedern, mit dessen Hilfe das Niveau des Fahrzeugaufbaus gegenüber einem festen Bezugspunkt einstellbar ist. Derartige Niveauregelsysteme weisen insbesondere den Vorteil auf, daß die Höhe des Fahrzeugaufbaus gegenüber einem festen Bezugspunkt unabhängig vom Beladungszustand des Kraftfahrzeuges genau eingestellt werden kann. Darüber hinaus ist es möglich, durch Beschicken der Luftfedern mit Druckluft den Fahrzeugaufbau anzuheben, beispielsweise um dem Kraftfahrzeug auf unebener Fahrstrecke eine größere Bodenfreiheit zu verleihen. Ferner kann der Fahrzeugaufbau des Kraftfahrzeuges durch Ablassen von Luft aus den Luftfedern abgesenkt werden, beispielsweise um ein Beladen des Kraftfahrzeuges zu erleichtern. Der Fahrzeugaufbau ist also zwischen einer Maximalhöhe, in der der Fahrzeugaufbau den größten Abstand zu einem festen Bezugspunkt einnimmt, und einer Minimalhöhe, in der der Fahrzeugaufbau den geringsten Abstand zu einem festen Bezugspunkt einnimmt, bewegbar.

Zur Regelung der Höhe des Fahrzeugaufbaus gegenüber einem festen Bezugspunkt benötigt die Niveauregelanlage Höhensensoren, mit dessen Hilfe die Höhe des Fahrzeugaufbaus gegenüber einem festen Bezugspunkt bestimmbar ist. Als Höhensensoren werden üblicherweise an sich bekannte Drehwinkelsensoren verwendet, deren Drehwinkelbereich in mehrere aufeinander folgende Drehwinkelintervalle unterteilt ist, wobei jedem Drehwinkelintervall in einem Kennfeld das gleiche Signalintervall zugeordnet ist (derartige Drehwinkelsensoren werden in Form von Fahrzeugniveausensoren z.B. von der Firma Hella KG vertrieben). Jeder Drehwinkelsensor wird derartig in das Kraftfahrzeug eingebaut, daß alle möglichen Höhen des Fahrzeugaufbaus gegenüber einem festen Bezugspunkt den Drehwinkeln genau eines Drehwinkelintervalls zugeordnet sind und sich der Drehwinkelsensor ausschließlich zwischen einem unteren und oberen Drehwinkel bewegt. In diesem Fall bewegt sich das von dem Drehwinkelsensor angezeigte Signal ausschließlich zwischen einem unteren und einem oberen Grenzsignal eines Kennfeldes. Bei entsprechender Programmierung der Steuereinheit ist es daher möglich, aus dem Signal, das ein Drehwinkelsensor anzeigt, eindeutig auf die Höhe des Fahrzeugaufbaus gegenüber einem festen Bezugspunkt zu schließen.

Mit der genannten Anordnung eines Drehwinkelsensors ist die Höhe des Fahrzeugaufbaus eines Kraftfahrzeuges gegenüber einem festen Bezugspunkt an sich einfach und genau meßbar. Es kann jedoch dazu kommen, daß der Sensor ungenau eingebaut wird bzw. Bauteiltoleranzen sich ungünstig addieren, so daß der Sensor während des Durchlaufs des Fahrzeugaufbaus durch den gesamten Höhenbereich Drehwinkel aus zwei Drehwinkelintervallen annimmt (was im folgenden als Kennfeldüberschreitung bezeichnet wird). Eine richtige Zuordnung des vom Sensor angezeigten Signals zu einer Fahrzeughöhe ist dann nicht mehr ohne weiteres möglich und es kommt zu Fehlregelungen (näheres s. Figurenbeschreibung).

Der Erfindung liegt die Aufgabe zugrunde, ein Verfahren zu schaffen, mit dessen Hilfe der Abstand zweier zwischen einer unteren und einer oberen Abstandsgrenze zueinander beweglicher Bezugspunkte, insbesondere der Abstand eines Fahrzeugaufbaus eines Kraftfahrzeuges gegenüber einem festen Bezugspunkt, mittels eines eingangs genannten Sensors auch dann noch richtig bestimmt werden kann, wenn die Einbaulage des Sensors von einer vorgegebenen Einbaulage abweicht.

Gemäß den kennzeichnenden Merkmalen des Anspruchs 1 wird die Aufgabe dadurch gelöst, daß zur Kalibrierung des Sensors folgende Verfahrensschritte durchgeführt werden:
- der Sensor wird möglichst nahe an der definierten Position zu den beiden Bezugspunkten angeordnet
- in mindestens einem Abstand der beiden Bezugspunkte wird aus der Differenz des Signals, das ein in der definierten Position befindlicher Sensor anzeigen würde, und des von dem Sensor angezeigten Signals ein Offset O bestimmt,
und daß zur Bestimmung des Abstandes der beiden zueinander beweglichen Bezugspunkte folgende Verfahrensschritte durchgeführt werden:
- zu dem von dem Sensor S angezeigten Signal wird der Offset O addiert, so daß ein Summensignal SS = S + O entsteht
- dem Summensignal SS wird der Abstand der beiden Bezugspunkte zugeordnet, der dem gleich großen Signal zugeordnet würde, das ein in der definierten Position befindlicher Sensor anzeigen würde, wenn das Summensignal SS zwischen dem unteren Sₘᵢₙ und dem oberen Grenzsignal Sₘₐₓ liegt
- aus dem Summensignal wird der Abstand der beiden Bezugspunkte wie folgt bestimmt, wenn das Summensignal SS außerhalb des Signalintervalls von der unteren Sₘᵢₙ bis zur oberen Abstandsgrenze Sₘₐₓ liegt:
   - wenn das Summensignal SS oberhalb des oberen Grenzsignals Sₘₐₓ liegt, wird dem Summensignal SS ein Abstand der Bezugspunkte zugeordnet, der in der Nähe der unteren Abstandsgrenze hₘᵢₙ liegt oder dieser entspricht
   - wenn das Summensignal SS unterhalb des unteren Grenzsignals liegt, wird dem Summensignal SS ein Abstand der Bezugspunkte zugeordnet, der in der Nähe der oberen Abstandsgrenze hₘₐₓ liegt oder dieser entspricht.

Unter einem Abstand, der in der Nähe der unteren Abstandsgrenze liegt, ist ein Abstand zu der unteren Abstandsgrenze zu verstehen, der zwischen 0 und 1/5 der Strecke zwischen den Abstandsgrenzen liegt. Entsprechend ist unter einem Abstand, der in der Nähe der oberen Abstandsgrenze liegt, ein Abstand zu der oberen Abstandsgrenze zu verstehen, der zwischen 0 und 1/5 der Strecke zwischen der Abstandsgrenze liegt (Beispiel: die Strecke zwischen den Abstandsgrenzen beträgt 100 mm; ein Abstand liegt dann in der Nähe der unteren Abstandsgrenze, wenn er zwischen 0 und 20 mm von der unteren Abstandsgrenze entfernt ist).

Die mit der Erfindung erzielten Vorteile sind insbesondere darin zu sehen, daß die Höhe des Fahrzeugaufbaus eines Kraftfahrzeuges mit Hilfe der genannten Sensoren auch dann noch möglich ist, wenn einer der Sensoren ungenau eingebaut ist, weil eine Kennfeldüberschreibung erkannt wird und damit eine fehlerhafte Interpretation des Sensorsignals vermieden wird. Somit ist eine Positionskorrektur eines Sensors nicht notwendig, auch wenn dieser nicht an der exakten Position eingebaut ist. Eine "fiktive Positionskorrektur" wird vielmehr durch die Berücksichtigung des Offsets vorgenommen, der zu von dem Sensor angezeigten Signal addiert wird. Ein weiterer Vorteil der Erfindung ist darin zu sehen, daß die "fiktive Positionskorrektur" eines nicht exakt eingebauten Sensors durch die Bestimmung eines einzigen Offsets möglich ist, der z.B. bereits bei der Herstellung des Kraftfahrzeuges bei einer Kalibrierung eines jeden Sensors ohne großen Aufwand und damit preiswert bestimmt werden kann. Ein weiterer Vorteil ist darin zu sehen, daß das erfindungsgemäße Verfahren weiterhin auf Sensoren zurückgreift, die als preiswerte Standardbauteile erhältlich sind. Somit verteuert sich eine Niveauregelanlage, mit der das erfindungsgemäße Verfahren durchführbar ist, gegenüber herkömmlichen Niveauregelanlagen mit derartigen Sensoren nicht.

Gemäß einer Weiterbildung der Erfindung nach Anspruch 2 liegt der Abstand der beiden Bezugspunkte, in dem das von dem Sensor angezeigte Signal mit dem idealen Signal, das ein in der definierten Position befindlicher Sensor anzeigen würde, verglichen wird, in einem Bereich, in dem die von dem Sensor erzeugte Kennlinie weitestgehend linear verläuft. Der Vorteil dieser Weiterbildung ist darin zu sehen, daß sich der Offset dann besonders einfach und genau bestimmen läßt.

Ein Ausführungsbeispiel und weitere Vorteile der Erfindung werden im Zusammenhang mit den nachstehenden Figuren erläutert, darin zeigt:
- Figur 1: einen Ausschnitt aus einem Kraftfahrzeug mit einem gefederten Fahrzeugrad in schematischer Darstellung,
- Figur 2: einen Drehwinkelsensor,
- Figur 3: ein Diagramm,
- Figur 4 + 5: ein Diagramm.

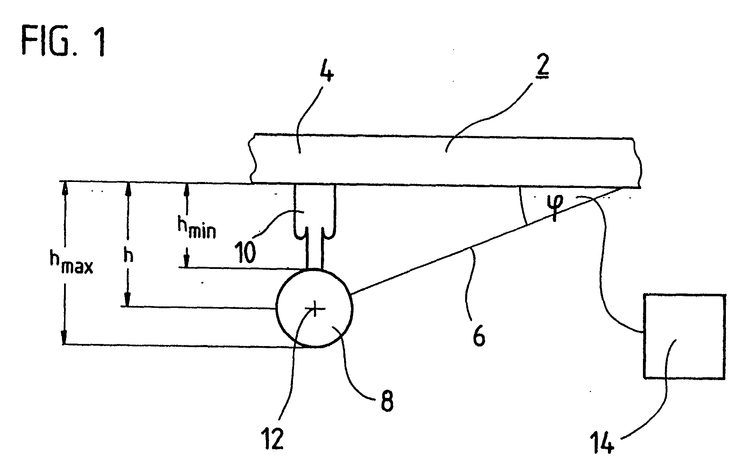

Figur 1 zeigt in stark vereinfachter schematischer Darstellung einen Ausschnitt aus einem Kraftfahrzeug 2 mit einem Fahrzeugaufbau 4. Der Fahrzeugaufbau 4 steht über einen Längslenker 6 mit einem Kraftfahrzeugrad 8 in Verbindung und ist gegenüber diesem mittels einer Luffeder 10 federnd gelagert. Der Fahrzeugaufbau 4 nimmt zu einem festen Bezugspunkt des Kraftfahrzeuges, beispielsweise zu dem Mittelpunkt 12 des Rades 8, eine Höhe h ein. Durch Beschicken der Luftfeder 10 mit Druckluft kann der Abstand des Fahrzeugaufbaus 4 vom Mittelpunkt 12 des Rades 8 bis zu einem Maximalabstand hₘₐₓ vergrößert werden. Das Kraftfahrzeug hat dann eine maximale Bodenfreiheit. Durch Entleeren der Luftfeder 10 kann der Fahrzeugaufbau 4 gegenüber dem Mittelpunkt 12 des Rades 8 bis zu einem Minimalabstand hₘᵢₙ abgesenkt werden, in dem das Kraftfahrzeug 2 auf (nicht gezeigte) Puffer aufsetzt. Das Kraftfahrzeug 2 nimmt dann sein niedrigstes Niveau ein. Zwischen hₘᵢₙ und hₘₐₓ kann der Fahrzeugaufbau 4 jeden Höhenzustand einnehmen.

Der Abstand h des Fahrzeugaufbaus 4 zu dem Mittelpunkt 12 des Rades 8 wird mit Hilfe einer Zentraleinheit 14 wie folgt geregelt: Der Winkel ϕ zwischen dem Fahrzeugaufbau 4 und dem Längslenker 6 wird mit Hilfe eines Drehwinkelsensors gemessen. Aus dem gemessenen Winkel ϕ erzeugt der Drehwinkelsensor ein Signal S, das an die Zentraleinheit 14 weitergegeben wird. In der Zentraleinheit 14 ist ein Kennfeld gespeichert, in dem die von dem Drehwinkelsensor übermittelten Signale in Abhängigkeit von der Höhe h des Fahrzeugaufbaus 4 zu dem Mittelpunkt 12 des Rades 8 dargestellt sind. Aufgrund eines von dem Drehwinkelsensor übermittelten Signals kann also in der Zentraleinheit 14 mit Hilfe des gespeicherten Kennfeldes auf den Abstand h geschlossen werden. Der aktuell ermittelte Abstand h wird mit einem vorgegebenen Abstand verglichen, den der Fahrzeugaufbau 4 gegenüber dem Mittelpunkt 12 des Rades 8 in der aktuellen Fahrsituation des Kraftfahrzeuges 2 einnehmen soll. Liegt der gemessene Abstand h unterhalb dieses vorgegebenen Abständes, so veranlaßt die Zentraleinheit 14, daß die Luftfeder 10 mit Druckluft beschickt wird, andernfalls veranlaßt die Zentraleinheit 14, daß Druckluft aus der Luftfeder.10 abgelassen wird. Entsprechend wird an den anderen Luftfedern des Kraffahrzeuges 2 vorgegangen.

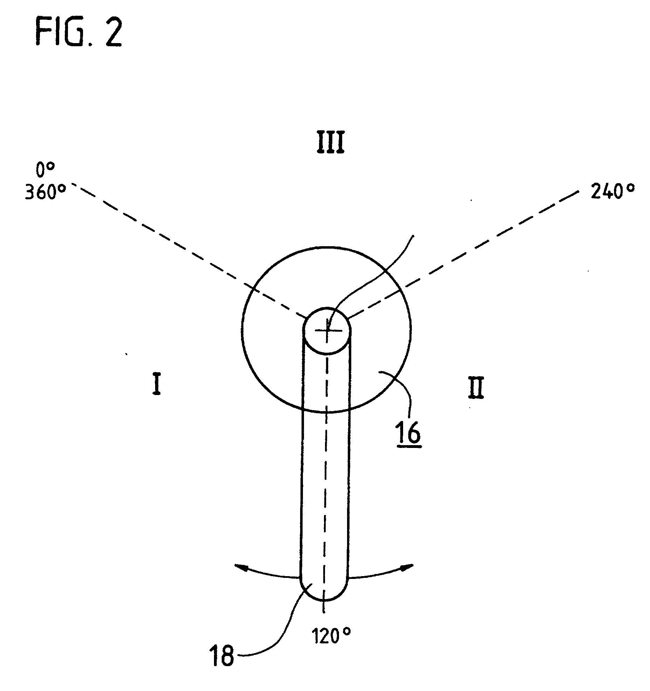

Figur 2 zeigt in schematischer Darstellung einen Drehwinkelsensor 16, mit dem der Winkel ϕ (siehe Fig. 1) meßbar ist. Der Drehwinkelsensor 16 verfügt über einen Betätigungshebel 18, der im Punkt 20 in der Papierebene drehbar gelagert ist. Hierbei kann der Stab 18 den kompletten Winkelbereich von 0 ° bis 360 ° überstreichen. Der gesamte Meßbereich des Drehwinkelsensors 16 ist in drei aufeinander folgende Meßwertintervalle I, II und III unterteilt, wobei das Meßwertintervall I von 0 ° bis 120 °, das Meßwertintervall II von 120 ° bis 240 ° und das Meßwertintervall III von 240 ° bis 360 ° reicht.

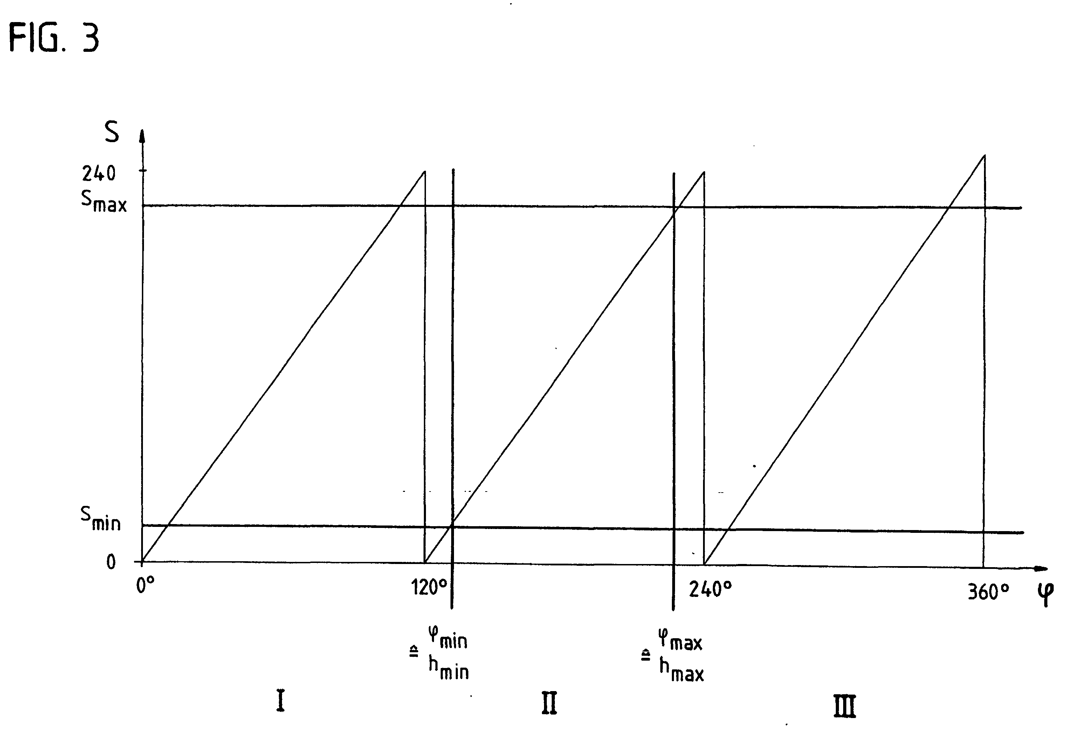

Im Zusammenhang mit der Figur 3 wird im folgenden erläutert, welche Signale der Drehwinkelsensor 16 beim Überstreichen der einzelnen Meßwertintervalle I, II und III erzeugt. Beim Überstreichen des Meßwertintervalls I von 0 ° bis 120 ° erzeugt der Drehwinkelsensor in der Null-Grad-Stellung das Signal 0 und in der 120 °-Stellung das Signal 240. In den dazwischenliegenden Winkelstellungen erzeugt der Drehwinkelsensor 16 die entsprechenden Signale, wobei zwischen der Winkelstellung des Drehwinkelsensors 16 und dem von ihm erzeugten Signal ein linearer Zusammenhang besteht, so wie es auch in der Figur 3 gezeigt ist. Es entsteht also in dem Meßwertintervall I ein Kennfeld, in dem jeder Meßwert des Meßwertintervalls genau einem Signal des Signalintervalls von 0 bis 240 zugeordnet ist und umgekehrt. Den Meßwertintervallen II und III wird ebenfalls das Signalintervall von 0 bis 240 zugeordnet. Der Drehwinkelsensor 16 zeigt also in Winkelstellungen, die um 120 ° zueinander versetzt sind, jeweils das gleiche Signal an (beispielsweise zeigt der Drehwinkelsensor 16 in den Winkelstellungen 60 °, 180 ° und 300 ° jeweils das Signal 120 an).

Der in der Figur 2 gezeigte Drehwinkelsensor 16 wird zwischen dem Fahrzeugaufbau 4 und dem Längslenker 6 (siehe Fig. 1) bei der Herstellung des Kraftfahrzeuges möglichst derart positioniert, daß alle möglichen Winkel ϕ, die zwischen Fahrzeugaufbau und Längslenker 6 eingenommen werden können, wenn der Abstand h zwischen hₘₐₓ und hₘᵢₙ variiert, innerhalb genau eines Meßwertintervalls des Drehwinkelsensors 16 liegen. Beispielsweise wird der Drehwinkelsensor 16 möglichst derart positioniert, daß alle möglichen Drehwinkel ϕ zwischen 120 ° und 240 °, also im Meßwertintervall II, liegen. In diesem Fall zeigt der Drehwinkelsensor 16 in der unteren Abstandsgrenze hₘᵢₙ (in der ein Drehwinkel ϕₘᵢₙ eingenommen wird) ein unteres Grenzsignal Sₘᵢₙ und in der oberen Abstandgrenze hₘₐₓ (in der ein Drehwinkel ϕₘₐₓ eingenommen wird) ein oberes Grenzsignal Sₘₐₓan (siehe Fig. 3). Jeder Abstand des Fahrzeugaufbaus 4 zu dem Mittelpunkt 12 des Rades 8 zwischen hₘᵢₙ und hₘₐₓ entspricht dann einem Winkel ϕ zwischen ϕₘᵢₙ und ϕₘₐₓ und läßt sich eindeutig einem Signal S zwischen Sₘᵢₙ und Sₘₐₓ zuordnen. Umgekehrt läßt sich aus dem von dem Drehwinkelsensor 16 angezeigten Signal S eindeutig auf den Abstand des Fahrzeugaufbaus 4 zu dem Mittelpunkt 12 des Rades 8 schließen, wenn der Drehwinkelsensor entsprechend genau eingebaut ist. Bei der Fabrikation des Kraftfahrzeuges wird jeder Drehwinkelsensor möglichst derart eingebaut, daß er sich in einer definierten Position befindet, in der die genannten Bedingungen erfüllt sind. Die Zentraleinheit kann dann bei entsprechender Programmierung aus dem Signal eines Drehwinkelsensors eindeutig eine Höhe des Fahrzeugaufbaus bestimmen.

Bei der Fabrikation des Kraftfahrzeuges kann es jedoch dazu kommen, daß der Drehwinkelsensor 16 derart eingebaut wird, daß von dem Drehwinkelsensor 16 sowohl Drehwinkel aus einem ersten Meßwertintervall als auch Drehwinkel aus einem zweiten Meßwertintervall überstrichen werden, wenn der Abstand h des Fahrzeugaufbaus 4 (siehe Fig. 1) zwischen hₘᵢₙund hₘₐₓ variiert. Eine richtige Bestimmung des Abstandes h aus dem von dem Drehwinkelsensor erzeugten Signal S ist dann nicht mehr ohne weiteres möglich, was im folgenden erläutert wird.

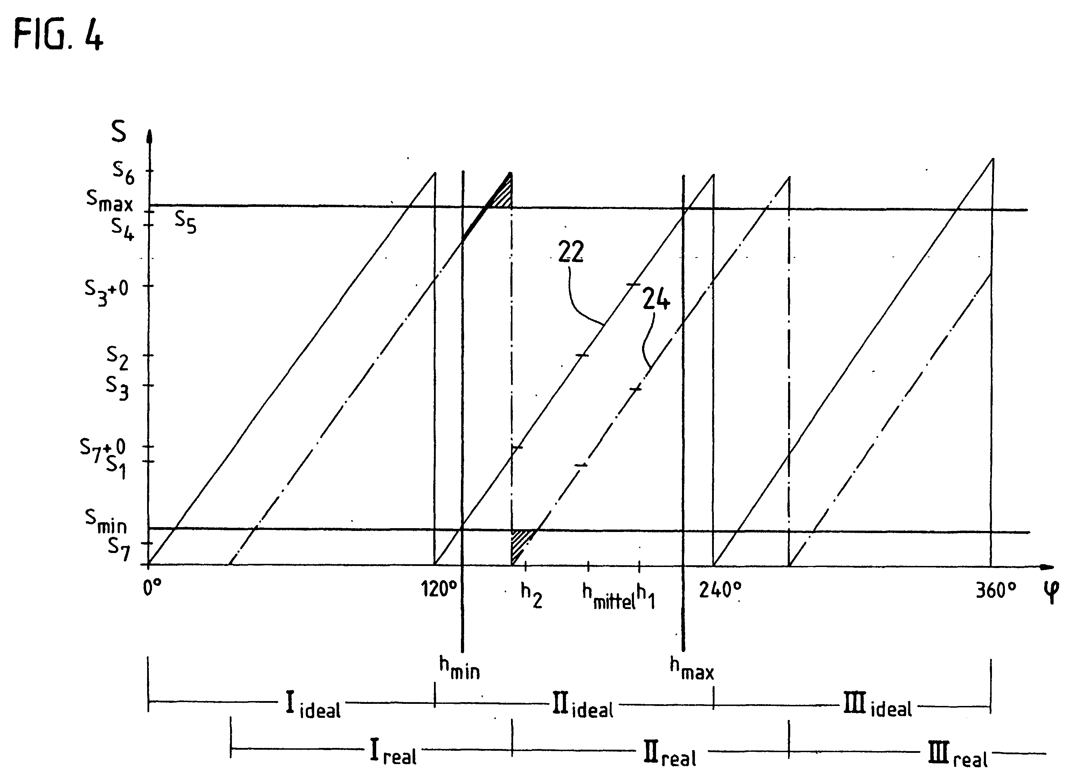

Figur 4 zeigt ein Diagramm, in dem der Drehwinkel ϕ des Drehwinkelsensors über dem Signal S aufgetragen ist. Die ideale Kennlinie 22 in dem Diagramm wird von einem Drehwinkelsensor erzeugt, der in dem Kraftfahrzeug in einer definierten Position derart eingebaut wurde, daß die Drehwinkel ϕₘᵢₙ und ϕₘₐₓ, die in Abständen hₘᵢₙ und hₘₐₓ eingenommen werden, beide innerhalb eines Meßwertintervalls, beispielsweise im Meßwertintervall II, liegen. Wie oben erläutert, ist es in diesem Fall möglich, aus dem von dem Drehwinkelsensor 16 angezeigten Signal S eindeutig den Abstand h zu bestimmen. Die Zentraleinheit 14, mit der der Abstand des Fahrzeugaufbaus 4 zu dem Mittelpunkt 12 des Rades 8 geregelt wird (siehe Fig. 1), ist so programmiert, daß sie bei der Regelung des Abstandes die ideale Kennlinie 22 zugrunde legt. Demzufolge wird in der Zentraleinheit 14 die Höhe hₘᵢₙ dem Signal Sₘᵢₙ und die Höhe hₘₐₓ dem Signal Sₘₐₓ zugeordnet und die Höhen zwischen hₘᵢₙ und hₘₐₓ werden Signalen zugeordnet, die zwischen Sₘᵢₙ und Sₘₐₓ liegen. Bei der Herstellung des Kraftfahrzeuges kann es jedoch passieren, daß der Drehwinkelsensor 16 derart eingebaut wird, daß zwischen den Abständen hₘᵢₙ und hₘₐₓ Drehwinkel aus unterschiedlichen Meßwertintervallen überstrichen werden. In der Figur 4 ist eine reale Kennlinie 24 eingezeichnet, die die Verhältnisse wiedergibt, wenn zwischen den Abständen hₘᵢₙ und hₘₐₓ sowohl Drehwinkel des Meßwertintervalls I als auch Drehwinkel des Meßwertintervalls II überstrichen werden und somit eine Kennfeldüberschreibung stattfindet. Die reale Kennlinie 24 ist gegenüber der idealen Kennlinie 22 nach rechts seitlich verschoben.

Durch den unpräzisen Einbau des Drehwinkelsensors 16 entstehen folgende Probleme: Aufgrund der seitlichen Verschiebung der idealen Kennlinie 22 in die reale Kennlinie 24 kommt es dazu, daß von dem Drehwinkelsensor 16 Signale S in der Nähe von Sₘₐₓ angezeigt werden, obwohl der Abstand h des Fahrzeugaufbaus 4 zu dem Mittelpunkt 12 des Rades 8 in der Nähe von hₘᵢₙ liegt (der entsprechende Teil der realen Kennlinie 24 ist in der Fig. 4 fett eingezeichnet). Da die Zentraleinheit 14 mit der idealen Kennlinie 22 arbeitet, schließt sie aus diesen hohen Signalwerten auf einen großen Abstand in der Nähe von hₘₐₓ. Soll das Kraftfahrzeug auf einen mittleren Abstand zwischen hₘᵢₙ und hₘₐₓ eingeregelt werden, so würde die Zentraleinheit veranlassen, daß Luft aus den Luftfedern 10 abgelassen wird, obwohl sich das Kraftfahrzeug in einem Niveau in der Nähe von hₘᵢₙ befindet und somit ein Auffüllen der Luftfedern notwendig wäre. Aufgrund des unpräzise eingebauten Drehwinkelsensors 16 würde die Zentraleinheit 14 also genau die der an sich notwendigen Regelung entgegengesetzte Regelung vornehmen.

Im Zusammenhang mit der Figur 4 wird im folgenden erläutert, wie mit dem erfindungsgemäßen Verfahren die oben genannten Probleme gelöst werden können: Bei der Herstellung des Kraftfahrzeuges wird der Drehwinkelsensor 16 möglichst nahe an der definierten Position zu dem Fahrzeugaufbau 4 und zu dem Mittelpunkt 12 des Rades 8 angeordnet, so daß die reale Kennlinie 24 möglichst nahe an der idealen Kennlinie 22 liegt, die in der Zentraleinheit 14 zur Regelung zugrunde gelegt wird. Danach wird in einem Abstand hₘᵢₜₜₑₗ (das einem definierten Normalniveau des Fahrzeugaufbaus entspricht), der bevorzugt in etwa mittig zwischen hₘᵢₙ und hₘₐₓ liegt, das von dem Drehwinkelsensor 16 angezeigte Signal S₁ mit dem idealen Signal S₂ verglichen, das ein exakt in der definierten Positon befindlicher Drehwinkelsensor anzeigen würde. Aus den Signalen S₂ und S₁ wird ein Offset O = S₂ - S₁ bestimmt. Der Offset O wird zusätzlich zu der idealen Kennlinie 22 permanent in der Zentraleinheit 14 (siehe Fig. 1) gespeichert.

Der Abstand hₘᵢₜₜₑₗ des Fahrzeugaufbaus zu einem festen Bezugspunkt muß zur Bestimmung des Offsets O möglichst genau eingestellt werden. Dies kann beispielsweise durch Messung des Abstandes mit einem externen genauen Abstandsmeßsystem erfolgen. Danach wird das ideale Signal S₂ bestimmt und der Offset O wie oben erläutert berechnet.

Im Betrieb des Kraftfahrzeuges 2 wird der Abstand des Fahrzeugaufbaus 4 zu dem Mittelpunkt 12 des Rades 8 wie folgt bestimmt: Zu dem von dem Drehwinkelsensor 16 angezeigten Signal S wird der Offset O addiert, so daß ein Summensignal SS = S + O entsteht. Dem Summensignal SS wird der Abstand des Fahrzeugaufbaus 4 zu dem Mittelpunkt des Rades 2 zugeordnet, der zu dem gleich großen Signal S der idealen Kennlinie 22 gehört, wenn das Summensignal SS innerhalb des Signalintervalls von Sₘᵢₙ bis Sₘₐₓ liegt (einschließlich der Intervallgrenzen).

Beispiel: Von dem Drehwinkelsensor 16 wird das Signal S₃ angezeigt. Zu diesem Signal S₃ wird der Offset O addiert, so daß das Summensignal SS = S₃ + O entsteht. Das Summensignal SS = S₃+ O liegt oberhalb von Sₘᵢₙ und unterhalb von Sₘₐₓ, also innerhalb des Signalintervalls von Sₘᵢₙ bis Sₘₐₓ (siehe Fig. 4). Dem Summensignal SS = S₃ + O wird von der Zentraleinheit 14 also die Höhe h₁ zugeordnet, die zu dem gleich großen Signal S = S₃ + O der idealen Kennlinie 22 gehört.

Es kann jedoch auch vorkommen, daß von dem Drehwinkelsensor 16 ein Signal S angezeigt wird, dessen dazugehöriges Summensignal SS = S + O oberhalb des oberen Grenzsignals Sₘₐₓ und somit außerhalb des Signalintervalls von Sₘᵢₙ bis Sₘₐₓ liegt (bei dem in der Fig. 4 gezeigten Fall ist das für alle Signale des Signalintervalls von S₄ bis S₆ der Fall). Die Zentraleinheit 14 ordnet in diesem Fall das von dem Drehwinkelsensor angezeigte Signal einer Höhe des Fahrzeugaufbaus 4 zu dem Mittelpunkt 12 des Rades 8 zu, der in der Nähe der unteren Abstandsgrenze hₘᵢₙ (und vorzugsweise zwischen hₘᵢₙ und hₘₐₓ) liegt oder dieser entspricht. Eine "falsche Regelung" durch die Zentraleinheit ist also nicht möglich, da die Zentraleinheit dem Signal des Drehwinkelsensors zumindest qualitativ den richtigen Abstand zuordnet.

Beispiel: Von dem Drehwinkelsensor 16 wird das Signal S₅ angezeigt, so daß das Summensignal SS = S₅ + O oberhalb des oberen Grenzsignals Sₘₐₓ liegt. Die Zentraleinheit 14 ordnet dem Signal S₅ dann die Höhe hₘᵢₙ bzw. eine Höhe, die in der Nähe von hₘᵢₙ liegt zu. Dies entspricht den tatsächlichen Gegebenheiten, so daß es in der Zentraleinheit 14 nicht zu einer falschen Regelung kommt, wenn sie diese Zuordnung bei der folgenden Regelung des Abstandes des Fahrzeugbaus 4 zu dem Mittelpunkt 12 des Rades 8 zugrunde legt.

Wird von dem Drehwinkelsensor 16 ein Signal S angezeigt, das zwischen 0 und Sₘᵢₙ liegt, und wird zu diesem Signal der Offset O hinzuaddiert, so liegt das Summensignal SS in dem Signalintervall von Sₘᵢₙ bis Sₘₐₓ. Dem Summensignal SS wird dann der Abstand des Fahrzeugaufbaus 4 zu dem Mittelpunkt 12 des Rades 8 zugeordnet, der zu dem gleich großen Signal S der idealen Kennlinie 22 gehört.

Beispiel: Der Drehwinkelsensor zeigt das Signal S₇ an, aus dem die Zentraleinheit 14 das Summensignal SS = S₇ + O bildet. Das Summensignal SS liegt innerhalb des Signalintervalls von Sₘᵢₙ bis Sₘₐₓ, so daß dem Signal S₇ bzw. dem Summensignal SS die Höhe h₂ zugeordnet wird.

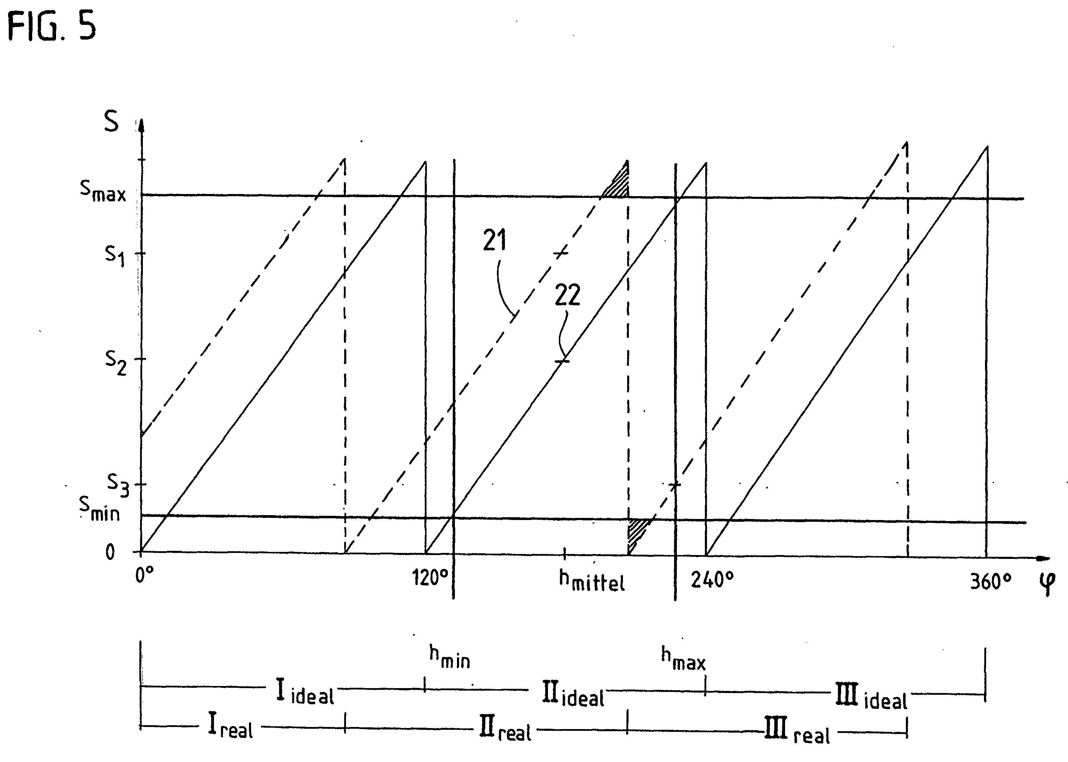

Figur 5 zeigt ein Diagramm, das weitestgehend dem in der Figur 4 gezeigten Diagramm entspricht. Der einzige Unterschied ist darin zu sehen, daß die reale Kennlinie 24 gegenüber der idealen Kennlinie 22 "nach links" versetzt ist. Dies hat zur Folge, daß der Drehwinkelsensor 16 zwischen dem kleinsten Abstand hₘᵢₙ und dem größten Abstand hₘₐₓ sowohl Meßwerte des Meßwertintervalls II als auch Meßwerte des Meßwertintervalls III überstreicht. Bei der Kalibrierung des Drehwinkelsensors 16 wird wiederum in dem Abstand hₘᵢₜₜₑₗ das von dem Drehwinkelsensor 16 angezeigte Signal S₁ mit dem Signal S₂ verglichen, das ein exakt eingebauter Drehwinkelsensor bei hₘᵢₜₜₑₗ anzeigen würde. Aus den Signalen S₂ und S₁ wird wiederum ein Offset O = S₂ - S₁ berechnet (man beachte, daß im Falle einer nach links verschobenen realen Kennlinie 24 der Offset O negativ ist, weil S₁ größer als S₂ ist). Der Offset O = S₂- S₁ wird wiederum zusammen mit der idealen Kennlinie 22, die jedem Signal im Signalintervall von Sₘᵢₙ bis Sₘₐₓ eine eindeutige Höhe zuordnet, permanent in der Zentraleinheit 14 gespeichert.

Im späteren Betrieb des Kraftfahrzeuges 4 wird in der Zentraleinheit aus dem Signal des Drehwinkelsensors 16 die Höhe des Fahrzeugaufbaus 4 über dem Mittelpunkt 12 des Rades 8 wie folgt bestimmt: Zu dem von dem Drehwinkelsensor 16 angezeigten Signal S wird der Offset O addiert (bzw. der Betrag des Offsets wird von dem Signal S abgezogen, was gleichbedeutend ist, wenn man bedenkt, daß der Offset negativ ist), so daß ein Summensignal SS = S + O entsteht. Liegt das Summensignal innerhalb des Signalintervalls von Sₘᵢₙ bis Sₘₐₓ, so wird dem Summensignal SS eine Höhe genauso zugeordnet, wie es bereits im Zusammenhang mit der Figur 4 erläutert worden ist.

Wird von dem Drehwinkelsensor 16 ein Signal angezeigt, dessen dazugehöriges Summensignal SS = S + O unterhalb des unteren Grenzsignals Sₘᵢₙ liegt, wird dem Summensignal SS eine Höhe des Fahrzeugaufbaus 4 über den Mittelpunkt 12 des Rades 8 zugeordnet, der in der Nähe der oberen Abstandsgrenze hₘₐₓ (und vorzugsweise zwischen hₘᵢₙ und hₘₐₓ) liegt oder dieser entspricht. Somit wird auch für solche Signale des Drehwinkelsensors 16, erkannt, daß sich der Fahrzeugaufbau 4 in der Nähe von hₘₐₓ befindet, so daß die Zentraleinheit 14 eine entsprechende Regelung vornehmen kann, um den Fahrzeugaufbau 4 abzusenken.

### Bezugszeichenliste

- 2: Kraftfahrzeug
- 4: Fahrzeugaufbau
- 6: Längslenker
- 8: Kraftfahrzeugrad
- 10: Luftfeder
- 12: Mittelpunkt
- 14: Zentraleinheit
- 16: Drehwinkelsensor
- 18: Betätigungshebel
- 20: Punkt
- 22: ideale Kennlinie
- 24: reale Kennlinie

## Patentansprüche

1. Verfahren zur Bestimmung des Abstandes zweier zwischen einer unteren und einer oberen Abstandsgrenze zueinander beweglicher Bezugspunkte, insbesondere Verfahren zur Bestimmung des Abstandes eines Fahrzeugaufbaus eines Kraftfahrzeuges gegenüber einem festen Bezugspunkt, mittels eines Sensors, dessen Meßbereich in mehrere aufeinander folgende Meßwertintervalle unterteilt ist, wobei jedem Meßwertintervall das gleiche Signalintervall zugeordnet ist, und wobei dem Verfahren zugrunde gelegt ist, daß
- daß der Sensor in einer definierten Position zu den beiden Bezugspunkten derart positioniert ist, daß alle möglichen Abstände der Bezugspunkte den Meßwerten genau eines Meßwertintervalls zugeordnet sind, und daß
- der Sensor in der unteren Abstandsgrenze ein unteres Grenzsignal und in der oberen Abstandsgrenze ein oberes Grenzsignal anzeigt, und daß
- der Sensor ein Signal zwischen dem unteren und dem oberen Grenzsignal anzeigt, wenn der Abstand der Bezugspunkte zwischen der unteren und der oberen Abstandsgrenze liegt
- aus dem von dem Sensor angezeigten Signal eindeutig auf den Abstand der Bezugspunkte geschlossen werden kann,
**dadurch gekennzeichnet, daß**
zur Kalibrierung des Sensors folgende Verfahrensschritte durchgeführt werden:
- der Sensor wird möglichst nahe an der definierten Position zu den beiden Bezugspunkten angeordnet
- in mindestens einem Abstand der beiden Bezugspunkte wird aus der Differenz des Signals, das ein in der definierten Position befindlicher Sensor anzeigen würde, und des von dem Sensor angezeigten Signals ein Offset O bestimmt,
und daß zur Bestimmung des Abstandes der beiden zueinander beweglichen Bezugspunkte folgende Verfahrensschritte durchgeführt werden:
- zu dem von dem Sensor S angezeigten Signal wird der Offset addiert, so daß ein Summensignal SS = S + O entsteht
- dem Summensignal SS wird der Abstand der beiden Bezugspunkte zugeordnet, der dem gleichen großen Signal zugeordnet würde, das ein in der definierten Position befindlicher Sensor anzeigen würde, wenn das Summensignal SS zwischen dem unteren Sₘᵢₙ und dem oberen Grenzsignal Sₘₐₓ liegt
- aus dem Summensignal wird der Abstand der beiden Bezugspunkte wie folgt bestimmt, wenn das Summensignal SS außerhalb des Signalintervalls von der unteren Sₘᵢₙ bis zur oberen Abstandsgrenze Sₘₐₓ liegt:
- wenn das Summensignal SS oberhalb des oberen Grenzsignals Sₘₐₓ liegt, wird dem Summensignal SS ein Abstand der Bezugspunkte zugeordnet, der in der Nähe der unteren Abstandsgrenze hₘᵢₙ liegt oder dieser entspricht
- wenn das Summensignal SS unterhalb des unteren Grenzsignals liegt, wird dem Summensignal SS ein Abstand der Bezugspunkte zugeordnet, der in der Nähe der oberen Abstandsgrenze hₘₐₓ liegt oder dieser entspricht.

2. Verfahren nach Anspruch 1, **dadurch gekennzeichnet, daß** der Abstand der beiden Bezugspunkte, in dem das von dem Sensor angezeigte Signal mit dem idealen Signal, das ein in der definierten Position befindlicher Sensor anzeigen würde, verglichen wird, in einem bereich liegt, in dem die von dem Sensor erzeugte Kennlinie weitestgehend linear verläuft.

## Claims

1. Method for determination of the distance between two reference points which move with respect to one another between a lower and an upper distance limit, in particular a method for determination of the distance of a vehicle structure of a motor vehicle from a fixed reference point, by means of a sensor whose measurement range is subdivided into a plurality of successive measured value intervals, with each measured value interval being allocated the same signal interval, and with the method being based on:
- the sensor being positioned in a defined position with respect to the two reference points such that all possible distances to the reference points are associated with the measured values of one and only one measured value interval, and
- the sensor indicating a lower limit signal at the lower distance limit and an upper limit signal at the upper distance limit, and
- the sensor indicating a signal between the lower and the upper limit signal when the distance to the reference points is between the lower and the upper distance limit,
- it being possible to deduce the distance to the reference points unambiguously from the signal which is indicated by the sensor,
**characterized in that**
the following method steps are carried out for calibration of the sensor:
- the sensor is arranged as close as possible to the defined position with respect to the two reference points,
- an offset O is determined at at least one distance to the two reference points from the difference between the signal which would indicate a sensor located at the defined position and the signal indicated by the sensor,
and **in that** the following method steps are carried out in order to determine the distance of the two reference points which move with respect to one another:
- the offset is added to the signal indicated by the sensor S, thus resulting in a sum signal SS = S + 0
- the sum signal SS is associated with that distance between the two reference points which would be associated with the signal of the same magnitude which would indicate a sensor located at the defined position, when the sum signal SS is between the lower limit signal Sₘᵢₙ and the upper limit signal Sₘₐₓ,
- the distance between the two reference points is determined from the sum signal as follows when the sum signal SS is outside the signal interval from the lower distance limit Sₘᵢₙ to the upper distance limit Sₘₐₓ:
- when the sum signal SS is above the upper limit signal Sₘₐₓ, the sum signal SS is associated with a distance between the reference points which is in the vicinity of the lower distance limit hₘᵢₙ or corresponds to this,
- when the sum signal SS is below the lower limit signal, the sum signal SS is associated with a distance between the reference points which is in the vicinity of the upper distance limit hₘₐₓ, or corresponds to it.

2. Method according to Claim 1, **characterized in that** the distance between the two reference points at which the signal indicated by the sensor is compared with the ideal signal which would indicate a sensor located at the defined position is in a range in which the characteristic produced by the sensor runs very largely linearly.

## Revendications

1. Procédé de détermination de la distance entre deux points de référence qui se déplacent l'un par rapport à l'autre entre une limite inférieure de distance et une limite supérieure de distance et en particulier procédé de détermination de la distance entre la carrosserie d'un véhicule et un point de référence fixe au moyen d'un détecteur dont la zone de mesure est divisée en plusieurs intervalles consécutifs de valeurs de mesure, dans lequel le même intervalle de signaux est associé à chacun des intervalles de valeurs de mesure et dans lequel les bases du procédé sont:
- que le détecteur est placé dans une position définie par rapport aux deux points de référence de telle sorte que toutes les distances possibles entre les points de référence sont associées aux valeurs de mesure d'exactement un intervalle de valeurs de mesure,
- que le détecteur affiche un signal de limite inférieure à la limite inférieure de distance et un signal de limite supérieure à la limite supérieure de distance,
- que le détecteur affiche un signal intermédiaire entre le signal de limite inférieure et le signal de limite supérieure lorsque la distance entre les points de référence est comprise entre la limite inférieure de distance et la limite supérieure de distance et
- que le signal affiché par le détecteur permet de connaître sans ambiguïté la distance entre les points de référence,
**caractérisé en ce que** pour étalonner le détecteur, on exécute les étapes de procédé suivantes :
- agencer le détecteur le plus près possible de la position définie par rapport aux deux points de référence,
- pour au moins une distance entre les deux points de référence, déterminer un décalage O à partir de la différence entre le signal qu'aurait affiché le détecteur dans la position définie et le signal qu'il affiche effectivement,
et **en ce que**, pour déterminer la distance entre deux les points de référence qui se déplacent l'un par rapport à l'autre, on exécute les étapes de procédé qui consistent à :
- additionner un décalage au signal affiché par le détecteur S, de manière à obtenir un signal de somme SS = S + O,
- lorsque le signal de somme SS est compris entre le signal de limite inférieure Sₘᵢₙ et le signal de limite supérieure Sₘₐₓ, associer au signal de somme SS la distance entre les deux points de référence à laquelle aurait été associé le signal de même grandeur que celui qu'aurait affiché un détecteur placé dans la position définie
- déterminer comme suit la distance entre les deux points de référence à partir du signal de somme SS lorsque celui-ci n'est pas compris dans l'intervalle de signaux situé entre le signal de limite inférieure Sₘᵢₙ et le signal de limite supérieure Sₘₐₓ :
- lorsque le signal de somme SS est supérieur au signal de limite supérieure Sₘₐₓ, associer au signal de somme SS une distance entre les points de référence qui est proche de la limite inférieure de distance hₘᵢₙ ou qui y correspond et
- lorsque le signal de somme SS est inférieur au signal de limite inférieure, associer au signal de somme SS une distance entre les points de référence qui est proche de la limite supérieure de distance hₘₐₓ ou qui y correspond.

2. Procédé selon la revendication 1, **caractérisé en ce que** la distance entre les deux points de référence à laquelle on compare le signal affiché par le détecteur au signal idéal qu'un détecteur placé dans la position définie aurait affiché est située dans une plage dans laquelle la courbe affichée par le détecteur est très largement linéaire.
